# DEMANDE DE BREVET EUROPEEN

(11) **EP 1 473 534 A1**
(43) Date de publication de la demande: **03.11.2004**
(21) Numéro de dépôt: 03447097.1
(22) Date de dépôt: 28.04.2003
(51) Int. Cl.: F27D 3/02, F27B 9/24, C03B 35/18

(54) **Rouleau et dispositif d'entraînement en rotation**

(71) Demandeur: Vesuvius Crucible Company, Wilmington, DE 19803 (US)
(72) Inventeur: Caillaud, Frédéric, 59750 Feignies (FR); Deremetz, Jacky, 59330 Neuf Mesnil (FR)
(74) Mandataire: Debled, Thierry

(57) **Abrégé**

L'invention concerne un rouleau en matériau réfractaire, par exemple en silice vitreuse, pour le transport de verre, muni à ses extrémités d'un nouvel agencement pour son entraînement en rotation, ainsi qu'un ensemble d'un tel rouleau et de son dispositif d'entraînement.

Ce rouleau comporte au moins une face latérale dans laquelle sont formés des orifices destinés à recevoir des broches d'entraînement en rotation; il se caractérise en ce que lesdits orifices ont une section transversale qui est plus grande dans la direction radiale du rouleau que dans sa direction tangentielle.

L'invention permet d'éviter la casse du rouleau autour de ses orifices d'entraînement.

## Description

L'invention concerne un rouleau en matériau réfractaire, par exemple en silice vitreuse, pour le transport d'un matériau plat, muni à ses extrémités d'un nouvel agencement pour son entraînement en rotation, ainsi qu'un ensemble d'un tel rouleau et de son dispositif d'entraînement.

Dans les industries verrière ou métallurgique, le convoyage du verre ou du métal en cours de fabrication, et sous forme de plaques, feuilles, feuillards ou de bandes continues, s'effectue sur des rouleaux de silice, disposés en nappe, parallèlement les uns aux autres. Ce transport s'effectue généralement à des températures élevées.

Ces rouleaux sont entraînés en rotation à une vitesse linéaire égale à celle du verre ou du métal, afin de ne pas en endommager la surface.

Plus particulièrement dans le cas du convoyage d'une bande ou plaque de métal, chaque rouleau est supporté par un arbre porteur en acier, qui traverse un alésage axial du rouleau et dépasse du rouleau à ses deux extrémités, en assurant à la fois son maintien rectiligne et son centrage pendant la rotation. A cet effet, cet alésage axial présente une surface longitudinale interne lisse et cylindrique, qui est précisément coaxiale à la face longitudinale externe du rouleau et présente un diamètre prédéterminé.

L'entraînement en rotation du rouleau est assuré par un dispositif d'entraînement comprenant des doigts parallèles à l'arbre, disposés autour de chaque extrémité de ce dernier et portés par un support tournant avec l'arbre. Chaque doigt pénètre dans un orifice formé dans la face latérale du rouleau, c'est-à-dire dans l'épaisseur du rouleau qui est comprise entre l'alésage longitudinal et la face longitudinale externe.

Un défaut qui peut apparaître avec un tel dispositif d'entraînement est que le bord du rouleau, fragilisé par la présence des orifices, se casse dans sa partie comprise entre ledit orifice et l'alésage axial. En particulier, lors de l'utilisation du rouleau, l'augmentation de température subie par le rouleau et le dispositif d'entraînement provoque d'importantes différences dimensionnelles qui accroissent le risque de casse du rouleau autour de ses orifices d'entraînement.

Bien qu'un tel défaut ne soit pas directement préjudiciable au bon fonctionnement du rouleau, la présence de débris de silice à proximité du métal en cours de convoyage, du dispositif d'entraînement ou encore à l'intérieur de l'alésage longitudinal peut s'avérer préoccupante.

Ce défaut apparaît en particulier sur des rouleaux de petit diamètre, par exemple de 120 mm, à l'intérieur desquels il subsiste assez peu de matière entre l'alésage et les orifices.

La présente invention vise à remédier à ce défaut, en proposant un nouvel agencement pour l'entraînement en rotation d'un rouleau.

Selon l'invention, on entend par broche tout moyen apte à pénétrer dans un orifice du rouleau pour lui transmettre un couple de rotation. Ce terme recouvre notamment les doigts précédemment décrits.

La présente invention a tout d'abord pour objet un rouleau en matériau réfractaire pour le transport d'un matériau plat, comportant au moins une face latérale dans laquelle sont formés des orifices destinés à recevoir des broches d'entraînement en rotation, caractérisé en ce que lesdits orifices ont une section transversale qui est plus grande dans la direction radiale du rouleau que dans sa direction tangentielle.

La présente invention a également pour objet un ensemble comprenant:
- un rouleau en matériau réfractaire pour le transport d'un matériau plat, comportant au moins une face latérale dans laquelle sont formés des orifices destinés à recevoir des broches d'entraînement en rotation et
- un dispositif d'entraînement comportant des broches portées par un support rotatif, aptes à pénétrer dans les orifices du rouleau,
cet ensemble étant caractérisé en ce qu'au moins une broche et l'orifice destiné à la recevoir sont conformés de manière qu'il subsiste un jeu significatif, selon une direction radiale du rouleau, entre la broche et l'orifice, lorsque ladite broche a pénétré dans ledit orifice.

L'invention remédie au problème susmentionné en laissant un jeu significatif entre la broche et l'orifice dans la direction radiale du rouleau, c'est-à-dire dans une direction passant par l'axe du rouleau.

On entend par jeu significatif un espace libre permettant le mouvement de la broche, sur une course supérieure au jeu dû uniquement aux tolérances de fabrication, ainsi qu'au jeu fonctionnel nécessaire à la pénétration de la broche dans l'orifice. Le jeu significatif est avantageusement choisi de manière à permettre un mouvement de la broche dans l'orifice lors des changements de température intervenant lors de l'utilisation du rouleau. De préférence, ce jeu est supérieur à 4 mm.

Dans un mode de réalisation particulier, le rouleau comporte au moins une face longitudinale d'appui et les orifices débouchent sur cette face longitudinale d'appui.

Ce mode de réalisation présente l'avantage qu'à proximité de l'orifice, il n'existe plus de zone de matière fragilisée par le fait que son épaisseur est trop faible. En d'autres termes, plutôt que de laisser une fine épaisseur de matière susceptible de se casser sur le rouleau, on l'élimine d'emblée, afin d'éviter la production de débris indésirables.

Selon une première variante, la face longitudinale d'appui est la face longitudinale externe du rouleau, qui sert au transport. Cette variante est avantageuse pour un rouleau de petit diamètre, car la place laissée libre pour des orifices dans l'épaisseur du rouleau est plus grande si l'on réalise ces orifices à proximité de la face externe du rouleau. En outre, dans ce cas, la production de débris qui pourrait avoir lieu serait fortement préjudiciable car un débris viendrait aisément au contact du matériau en cours de convoyage. Il est donc avantageux d'éliminer d'emblée la partie fragilisée du rouleau.

Selon une deuxième variante, la face longitudinale d'appui est la face longitudinale interne du rouleau, par laquelle le rouleau s'appuie sur l'arbre porteur. Dans cette variante, la face externe du rouleau demeure intacte et continue, ce qui peut s'avérer préférable dans des applications particulières où toute la largeur du rouleau est utilisée pour transporter le matériau en cours de fabrication.

Selon une troisième variante, certains seulement des orifices débouchent sur la face longitudinale externe, les autres orifices débouchant sur la face longitudinale interne. De préférence, les orifices seront disposés symétriquement par rapport à l'axe du rouleau. Cette variante présente l'avantage de permettre un entraînement parfait du rouleau aussi bien à froid (au début des opérations de convoyage) qu'à chaud (une fois que les broches d'entraînement ont atteint leur température de régime). De la sorte, au début des opérations, des broches introduites dans les orifices débouchant sur la face externe et quasiment en contact avec le fond de l'orifice évitent les phénomènes de cliquetis (rebond sur la broche). Lorsque la température de régime est atteinte, ces broches en se dilatant s'éloignent radialement du fond des orifices correspondants. Par contre, les broches introduites dans les orifices débouchant sur la face interne se sont également dilatées et donc se sont rapprochées du fond des orifices correspondants et viennent maintenant quasiment en contact avec celui-ci en assurant dès lors un rôle similaire à chaud.

Selon une quatrième variante, les orifices débouchent sur la face longitudinale externe et sur la face longitudinale interne. Cette variante présente l'avantage, en particulier pour des rouleaux de petit diamètre, qu'on élimine d'emblée toute partie fragilisée du rouleau. De plus, la réalisation d'orifices traversant le rouleau, depuis son alésage jusqu'à sa face externe, peut être plus facile à réaliser.

Dans un mode de réalisation particulier de l'invention, au moins un orifice est délimité par au moins deux parois contenues dans des plans passant par l'axe de rotation du rouleau. Dans ce mode de réalisation, la broche correspondante sur le dispositif d'entraînement présente avantageusement la même caractéristique géométrique, à savoir qu'elle comporte au moins deux parois contenues dans des plans passant par l'axe de rotation du support rotatif des broches.

Cette configuration particulière des orifices et des broches procure une meilleure répartition de la surface globale d'appui entre le dispositif d'entraînement et le rouleau, ce qui contribue à réduire les risques de concentration de contraintes sur les bords du rouleau.

Afin de faciliter la compréhension de l'invention, on va maintenant en décrire des modes de réalisation, donnés uniquement à titre d'exemples non limitatifs de la portée de l'invention, à l'aide des dessins annexés dans lesquels:
- la figure 1 est une vue en coupe longitudinale d'un rouleau de silice vitreuse utilisé pour le transport de verre, selon l'état de la technique;
- la figure 2 est une vue de gauche du rouleau de l'état de la technique de la figure 1;
- la figure 3 est une vue analogue à la figure 1 d'un rouleau selon un premier mode de réalisation de l'invention ;
- la figure 4 est une vue de gauche du rouleau de la figure 3;
- la figure 5 est une vue analogue à la figure 4 d'un rouleau selon un deuxième mode de réalisation de l'invention;
- la figure 6 est une vue analogue à la figure 4 d'un rouleau selon un troisième mode de réalisation de l'invention;
- la figure 7 est une vue analogue à la figure 4 d'un rouleau selon un quatrième mode de réalisation de l'invention;
- la figure 8 est une vue analogue à la figure 4 d'un rouleau selon un cinquième mode de réalisation de l'invention.

Sur les dessins, les pièces sont représentée à température ambiante, c'est-à-dire dans la position qu'elles occupent lorsque le rouleau n'est pas en cours d'utilisation pour le transport du verre. Les dilatations des pièces chaudes occasionnent des déplacements relatifs entre pièces qui ne sont pas représentés ici.

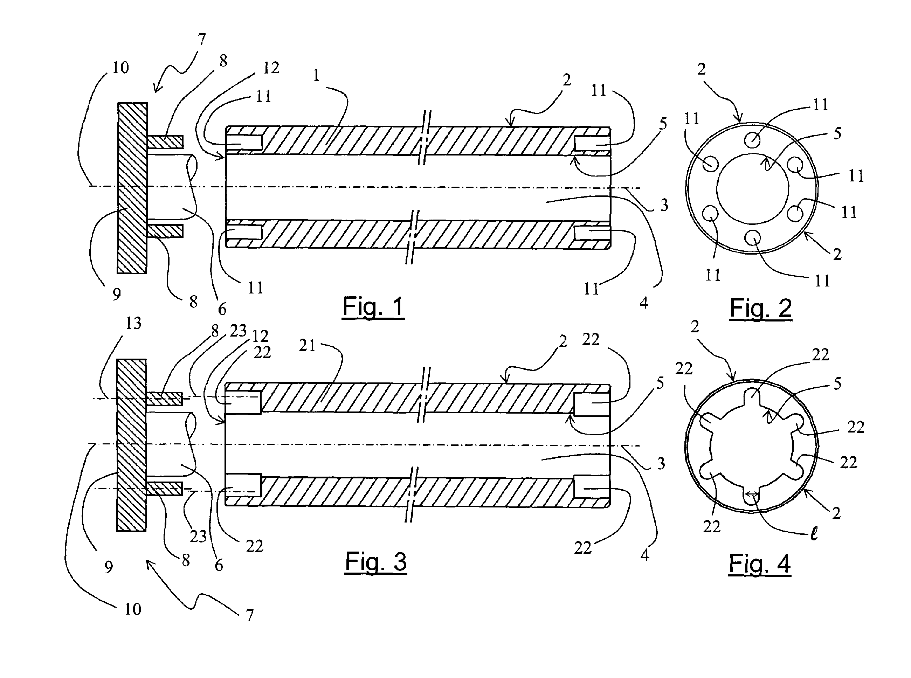

Dans l'état de la technique, qui est illustré par les figures 1 et 2, un rouleau 1 de forme cylindrique est réalisé en silice vitreuse par un procédé de fabrication connu.

Ce rouleau a une longueur de plusieurs mètres et un diamètre qui, selon le modèle de rouleau considéré, peut être compris entre 10 et 20 centimètres.

Une face longitudinale externe 2 du rouleau sert de surface d'appui pour du métal en cours de fabrication (non représenté) qui est transporté grâce à plusieurs rouleaux du même type, disposés en nappe, parallèlement les uns aux autres.

Le métal roule sur la face longitudinale externe 2 du rouleau, qui doit présenter à cet effet un état de surface très lisse et une forme très précisément cylindrique d'axe 3.

Un alésage axial 4 est formé à l'intérieur du rouleau, en étant coaxial à la face externe longitudinale 2. La forme précisément cylindrique de la paroi 5 de l'alésage 4, qui est aussi désignée face longitudinale interne, est obtenue par un usinage précis qui assure que cette face longitudinale interne 5 a une forme cylindrique de même axe 3.

L'alésage 4 permet le passage d'un arbre porteur 6 (partiellement représenté) qui maintient le rouleau rectiligne et le supporte par la face d'appui 5, tout en permettant sa rotation.

L'entraînement du rouleau 1 en rotation est assuré, comme cela est en soi connu, par un dispositif d'entraînement 7 présent aux deux extrémités du rouleau mais dont une seule moitié, représentée à gauche du rouleau sur le dessin, est ici décrite.

Le dispositif d'entraînement comprend six doigts d'entraînement 8, parallèles à l'axe 3 et portés par un support 9 monté rotatif autour d'un axe 10 qui se confond avec l'axe 3 lorsque le rouleau est monté sur le dispositif d'entraînement.

Dans l'exemple représenté, l'arbre porteur 6 est solidaire du support rotatif 9, mais un autre agencement pourrait rendre l'arbre indépendant du support rotatif, du fait que l'arbre n'a pas pour fonction d'entraîner le rouleau en rotation.

Les six doigts 8 sont régulièrement répartis autour de l'arbre porteur 6 et coïncident avec six orifices 11 formés dans l'épaisseur du rouleau, sur sa face latérale d'extrémité 12 située au regard du dispositif d'entraînement.

La longueur des doigts 8 et des orifices 11 est choisie suffisante pour qu'en dépit des dilatations différentielles de l'arbre et du rouleau, les doigts conservent à l'intérieur des orifices une portion de leur longueur suffisante pour transmettre le couple requis au rouleau sans se tordre.

Le diamètre de chaque orifice 11 est légèrement supérieur à celui du doigt d'entraînement correspondant 8, de manière que les doigts puissent aisément coulisser dans les orifices, d'une part au moment du montage du rouleau, d'autre part lors des variations thermiques de l'ensemble, le support se dilatant plus que le rouleau.

Le dispositif d'entraînement, constitué par le support 7 et les doigts d'entraînement 8 combinés aux orifices 11, remplit donc une fonction d'entraînement qui est dissociée de la fonction de support, dévolue à l'arbre porteur 9.

On voit que le rouleau présente le risque que la mince portion de matière présente entre chaque orifice 11 et l'axe 3 ne soit détruite lors de l'utilisation du rouleau.

On va maintenant décrire un rouleau réalisé selon un premier mode de réalisation de l'invention, en référence aux figures 3 et 4.

Sur toutes les figures, les numéros de références précédemment utilisés désignent les mêmes pièces que celles déjà décrites.

Un rouleau 21 comporte une face longitudinale externe 2 et une face longitudinale interne 5 délimitant un alésage axial 4. Les faces longitudinales externe 2 et interne 5 sont coaxiales, elles partagent le même axe 3.

Les orifices 22 formés sur la face latérale d'extrémité 12 du rouleau sont ouverts en direction de l'axe 3, en débouchant sur toute leur longueur sur la face longitudinale interne 5.

En section, comme on le voit sur la figure 4, chaque orifice 22 a la forme d'un U avec une largeur I égale à son diamètre dans sa partie arrondie, diamètre qui est légèrement inférieur à celui des doigts 8 du dispositif d'entraînement.

A la différence de l'état de la technique, l'axe 23 de la partie arrondie de chaque orifice 22 est plus éloigné de l'axe 3 que l'axe 13 de chaque doigt 8 n'est éloigné de l'axe 10 sur le dispositif d'entraînement. De cette manière, lorsque les doigts d'entraînement 8 sont engagés dans les orifices 22, il subsiste un jeu entre chaque doigt 8 et le fond de l'orifice 22 correspondant, dans la direction radiale du rouleau, c'est-à-dire dans la direction passant par les axes 3 ou 10, 13 et 23 (le plan de la figure 3 est une de ces directions radiales).

A l'opposé des fonds des orifices, c'est-à-dire en direction de l'axe 3, l'absence de matière laisse libre un espace pour un débattement radial des doigts 8, résultant des dilatations thermiques différentielles qui se produisent lors de l'utilisation du rouleau.

Ainsi, le risque est éliminé qu'une mince portion de matière présente entre chaque orifice 11 et l'axe 3 ne soit détruite lors de l'utilisation du rouleau.

Dans une variante non représentée, les doigts 8 se trouvent au contact du fond de chaque orifice 22, comme dans l'état de la technique. Dans ce cas, les axes 13 et 23 se confondent, mais il subsiste toujours un jeu radial entre les doigts et l'axe 3 du fait de l'absence de matière.

Dans l'exemple qui vient d'être décrit, le dispositif d'entraînement 7 et le rouleau 21 comportent respectivement six doigts 8 et six orifices 22.

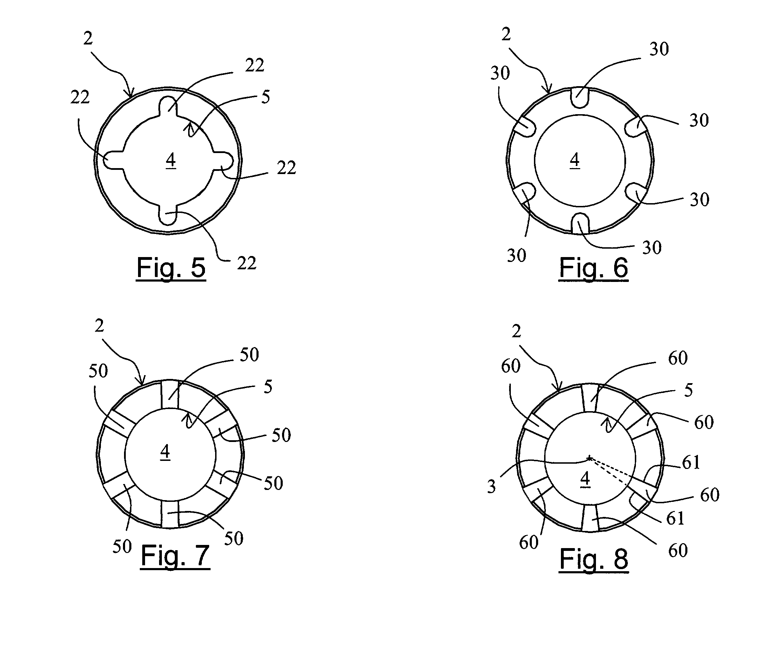

On ne sortirait pas du cadre de l'invention en modifiant ce nombre, à condition de respecter l'intégrité du rouleau lors de la transmission à ce dernier d'un moment de rotation. La figure 5 fournit une représentation d'un deuxième mode de réalisation dans lequel le nombre d'orifices 22 est de quatre.

Dans le troisième mode de réalisation de la figure 6, les orifices 30 débouchent non pas sur la face longitudinale interne 25 mais sur la face longitudinale externe 2.

Dans un autre mode de réalisation, non représenté, chaque orifice présente, en section, une forme oblongue dont les deux parties arrondies ont des axes distants radialement d'une longueur supérieure à la course de chaque doigt lors des dilatations thermiques différentielles entre le dispositif d'entraînement et le rouleau.

Ce mode de réalisation n'est réalisable que si le rouleau a un diamètre suffisant pour qu'il subsiste assez de matière de part et d'autre de chaque orifice oblong, suivant la direction radiale du rouleau, pour éviter sa détérioration et la production de débris.

Dans un cinquième mode de réalisation, représenté à la figure 7, les orifices 50 débouchent à la fois sur la face longitudinale externe 2 et sur la face longitudinale interne 5.

Enfin, dans le sixième mode de réalisation représenté à la figure 8, chaque orifice 60 est conformé de manière qu'il soit délimité par deux parois 61 contenues dans des plans passant par l'axe 3 et les doigts d'entraînement (non représentés) sont conformés de la même manière, avec au moins deux parois contenues dans des plans passant par l'axe 10.

Ce mode de réalisation peut être combiné avec l'un des précédents, dans lesquels les orifices ne débouchent pas nécessairement sur l'une ou sur les deux faces longitudinales du rouleau.

Dans tous les exemples décrits, la section des orifices est plus grande dans la direction radiale du rouleau que dans sa direction tangentielle.

Il est bien entendu que toute modification désirable pourrait être apportée aux exemples décrits ci-dessus, sans sortir pour cela du cadre de l'invention.

## Revendications

1. Rouleau en matériau réfractaire, comportant au moins une face latérale dans laquelle sont formés des orifices destinés à recevoir des broches d'entraînement en rotation, **caractérisé en ce que** lesdits orifices ont une section transversale qui est plus grande dans la direction radiale du rouleau que dans sa direction tangentielle.

2. Rouleau selon la revendication 1, comportant au moins une face longitudinale d'appui, dans lequel les orifices débouchent sur cette face longitudinale d'appui.

3. Rouleau selon la revendication 2, dans lequel la face longitudinale d'appui est une face longitudinale externe du rouleau.

4. Rouleau selon la revendication 2, dans lequel la face longitudinale d'appui est une face longitudinale interne du rouleau, par laquelle le rouleau s'appuie sur l'arbre porteur.

5. Rouleau selon les revendications 3 et 4, dans lequel les orifices débouchent sur la face longitudinale externe et sur la face longitudinale interne.

6. Rouleau selon l'une des revendications 1 à 5, dans lequel au moins un orifice est délimité par au moins deux parois contenues dans des plans passant par l'axe de rotation du rouleau.

7. Ensemble comprenant:
- un rouleau en matériau réfractaire comportant au moins une face latérale dans laquelle sont formés des orifices destinés à recevoir des broches d'entraînement en rotation et
- un dispositif d'entraînement comportant des broches portées par un support rotatif, aptes à pénétrer dans les orifices du rouleau,
cet ensemble étant **caractérisé en ce qu'**au moins une broche et l'orifice destiné à la recevoir sont conformés de manière qu'il subsiste un jeu significatif, selon une direction radiale du rouleau, entre la broche et l'orifice, lorsque ladite broche a pénétré dans ledit orifice.

8. Ensemble selon la revendication 7, dans lequel le rouleau comporte au moins une face longitudinale d'appui et les orifices débouchent sur cette face longitudinale d'appui.

9. Ensemble selon la revendication 8, dans lequel la face longitudinale d'appui est une face longitudinale externe du rouleau.

10. Ensemble selon la revendication 8, dans lequel la face longitudinale d'appui est une face longitudinale interne du rouleau, par laquelle le rouleau s'appuie sur l'arbre porteur.

11. Ensemble selon les revendications 9 et 10, dans lequel les orifices débouchent sur la face longitudinale externe et sur la face longitudinale interne.

12. Ensemble selon l'une des revendications 7 à 11, dans lequel au moins un orifice est délimité par au moins deux parois contenues dans des plans passant par l'axe de rotation du rouleau.
